# FASCICULE DE BREVET EUROPEEN

(11) **EP 2 188 095 B1**
(45) Date de publication et mention de la délivrance du brevet: **02.02.2011**
(21) Numéro de dépôt: 08803889.8
(22) Date de dépôt: 09.09.2008
(51) Int. Cl.: B25J 21/02, G21F 7/053

(54) **DISPOSITIF DE RÉDUCTION DE DIAMÈTRE DE RONDS DE SACS**
VORRICHTUNG ZUR DURCHMESSERVERRINGERUNG VON BEUTELÖFFNUNGEN
DEVICE FOR REDUCING THE DIAMETER OF BAG PORTS

(30) Priorité: 11.09.2007 FR 0757490
(43) Date de publication de la demande: 26.05.2010
(73) Titulaire: Areva NC, 75009 Paris (FR)
(72) Inventeur: MARES, Christian, F-30290 Laudun (FR); RIBA, Pierre, F-30150 Sauveterre (FR)
(74) Mandataire: Ilgart, Jean-Christophe
(86) Numéro de dépôt international: PCT/EP2008/061921
(87) Numéro de publication internationale: WO 2009/034075

(56) Documents cités:
- EP-A- 0 549 450
- WO-A-96/11092
- FR-A- 2 678 200
- US-A- 5 316 733

## Description

### DOMAINE TECHNIQUE

L'invention concerne un dispositif de réduction du diamètre d'un rond de gant équipant une enceinte telle qu'une boîte à gants.

Les boîtes à gants sont généralement ventilées en azote en fonctionnement normal grâce à un circuit spécifique commun à l'ensemble des boîtes à gants appelé « ventilation enceinte », l'ensemble de ce circuit étant en dépression par rapport aux salles dans lesquelles sont implantées les boîtes à gants.

Pour certains travaux importants nécessitant notamment des entrées/sorties de matériel encombrant, on utilise des orifices appelés ronds de sacs dont le diamètre varie de 500 à 800 mm. Lors de ces opérations, la dépression dans les boîtes à gants doit être ramenée aux environs de -100 Pa au lieu de -350 Pa en fonctionnement normal. Cette diminution de la dépression a pour but de permettre de manipuler les manches vinyle servant aux entrées/sortie de matériel. En effet, avec une dépression aussi élevée que 350 Pa, le risque que la manche soit aspirée dans la boîte à gants est trop important. La limite acceptée des opérations d'entrées/sorties par rond de sac est limitée à une surface correspondant à un diamètre maximum de 400 mm pour une entreprise spécialisée et à 330 mm pour des intervenants non spécialistes, lorsque la dépression en fonctionnement normal est de -350 Pa.

Pour des raisons de sûreté, l'ensemble du réseau "ventilation enceinte" ne peut être ramené à -100 Pa. Il est par conséquent nécessaire d'isoler la boîte à gants concernée dans des moyens mécaniques (tapage) de l'ensemble du réseau ventilation enceinte et donc de passer en ventilation à l'air. Dans ce cas, l'entrée d'air dans les boîtes à gants s'effectue à partir de soupapes qui prennent l'air dans la salle procédé.

L'isolement mécanique (tapage) de la boîte à gants concernée est consommateur de temps, de ressources humaines et génère de la dosimétrie pour les intervenants.

Les emplacements de tapage sont la plupart du temps équipés de capteurs servant à positionner des conteneurs qui transitent en fonctionnement normal par ces zones de tapage. Ce sont généralement des zones d'interface entre deux boîtes à gants. L'isolement mécanique de la boîte à gants est à l'origine de la perte des réglages des capteurs en interface et boîte à gants au point de tapage.

Il est connu du document EP-A-0 549 450 de fixer sur un rond de gant une entretoise munie de bavettes anti-retour afin d'empêcher que le gant soit aspiré vers l'intérieur de l'enceinte.

Par ailleurs, des ronds de sac de forme allongée, notamment ovoïde, sont connus du document WO-A-96 11 092.

La présente invention a pour objet un dispositif permettant d'éviter le passage en ventilation air pour introduire du matériau volumineux dans une boîte à gants.

Ces buts sont atteints, conformément à l'invention, par le fait que le dispositif comprend une entretoise de réduction de diamètre possédant un premier orifice circulaire ayant un diamètre égal au diamètre du rond de sac, ce premier orifice étant dirigé vers le rond de sac et un second orifice dirigé vers l'extérieur de l'enceinte en sens opposé au premier orifice, ce second orifice ayant une forme allongée, notamment ovoïde.

Cette forme allongée, par exemple ovoïde, permet le passage d'un matériel dont l'une des dimensions est supérieure à son petit axe tout en étant inférieure à son grand axe.

Dans une réalisation particulière, le premier orifice est raccordé de manière étanche au rond de sac de l'enceinte par une manche en vinyle.

Dans une autre réalisation particulière, le second orifice est fermé par un sac en vinyle. A titre d'exemple, le diamètre du premier orifice est compris entre 500 et 800 mm et le second orifice possède un grand axe qui mesure au maximum 400 mm.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue schématique d'ensemble d'un dispositif de réduction du diamètre d'un rond de sac conforme à la présente invention ;
- la figure 2 est une variante du dispositif de la figure 1 ;
- la figure 3 est une vue à échelle agrandie d'une partie importante de l'entretoise de réduction de diamètre ;
- la figure 4 est une vue de face de l'entretoise de réduction de diamètre.

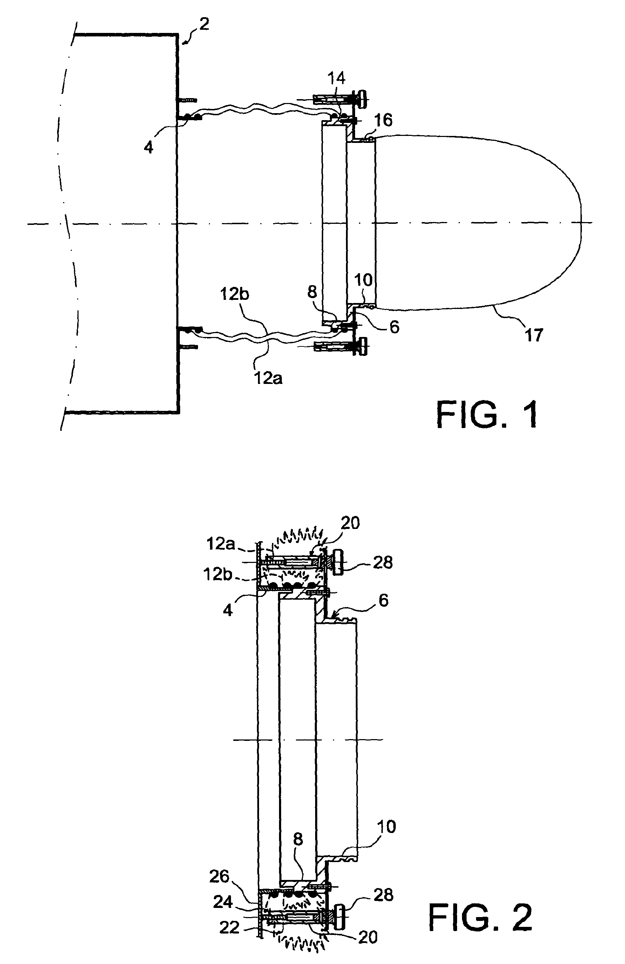

Sur la figure 1, la référence générale 2 désigne une boîte à gants. Celle-ci est équipée d'un rond de sac 4 dont le diamètre est compris entre 500 et 800 mm. La référence 6 désigne une entretoise de réduction de diamètre. Cette dernière comporte un premier orifice circulaire 8 dont le diamètre est sensiblement égal à celui du rond de sac 4. Le diamètre 8 est tourné vers le rond de sac 4. A son extrémité opposée, l'entretoise de réduction de diamètre 6 comporte un second orifice 10. Ce second orifice est de forme ovoïde. Il possède un petit axe et un grand axe, le grand axe ayant une longueur inférieure au diamètre du grand orifice 8. A titre d'exemple, la longueur du grand axe de l'orifice ovoïde 10 est par exemple de 400 mm. Une manche de vinyle de grand diamètre 12 est montée à une première extrémité sur le rond de sac 4 et à une seconde extrémité sur le pourtour extérieur de l'orifice de grand diamètre 8. La manche de vinyle est équipée à chaque extrémité d'un jonc. Le diamètre du jonc est adapté au diamètre des orifices de la manche. A cet effet, l'orifice de grand diamètre est muni extérieurement d'une pluralité de gorges 14 qui permettent de retenir la manche de vinyle. La manche de vinyle est équipée à chaque extrémité d'un jonc. Le diamètre du jonc est adapté au diamètre des orifices de la manche.

La manche de vinyle peut être fixée en deux positions. Dans la première position désignée par la référence 12a, elle est utilisée pour les manipulations de la réduction (remise en tel que construit) ou pour le rangement de la manche tunnel dans la seconde position désignée par la référence 12b.

Dans cette seconde position, la manche tunnel est en position normale pour l'utilisation de l'entretoise de réduction de diamètre.

Le second orifice 10 est muni, sur son pourtour extérieur, de gorges 16 qui permettent de retenir un sac de fermeture 17, par exemple en vinyle. Grâce à la réduction de section, on évite le phénomène potentiel d'aspiration des manches vinyle lié aux grands diamètres.

On a représenté sur la figure 2 le dispositif de la figure 1 dans une configuration différente. L'entretoise de réduction de diamètre 6 est raccordée directement sur le rond de sac 4. Des dispositifs de fixation 20 permettent de maintenir l'entretoise de réduction de diamètre 6 sur le rond de sac 4. Dans l'exemple de réalisation représenté, ces moyens sont constitués par un tube fileté intérieurement 22 qui vient se visser sur une vis 24 solidaire de la paroi 26 sur laquelle est monté le rond de sac 4. Un bouton moleté 28 permet d'assurer le serrage de la vis.

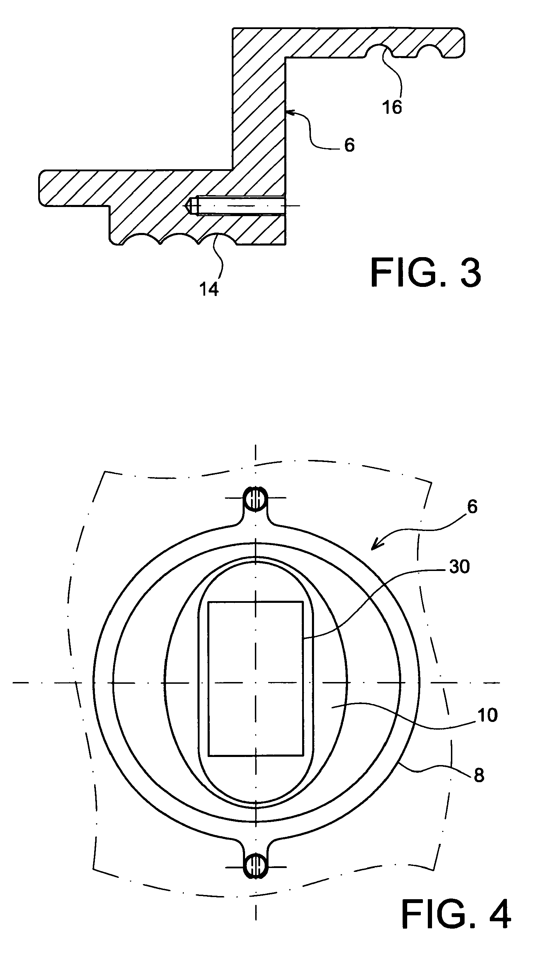

On a représenté sur la figure 3 une vue de détail à plus grande échelle de la partie intérieure de l'entretoise 6 de réduction du diamètre. On reconnaît sur cette figure les gorges 14 qui permettent la fixation de la manche de vinyle et les gorges 16 qui permettent la fixation du sac de vinyle 17.

On a représenté sur la figure 4 une vue de face de l'entretoise de réduction de diamètre 6. On retrouve l'orifice de grand diamètre 8 et l'orifice de petit diamètre 10. Grâce à sa forme allongée, le second orifice 10 permet de faire passer des pièces 30 ayant une dimension supérieure à celles qui seraient admissibles par un rond de sac de type classique.

A titre d'exemple, on peut introduire ou sortir de l'enceinte un vérin avec support, un sabot de presse, une meule de travail ou des déchets. Il s'agit de matériels moyennement encombrants. Ils ne peuvent être introduits par un rond de sac de 300 mm de diamètre, une de leurs dimensions dépassant cette valeur, mais ils peuvent l'être par un rond de sac de forme spécifique dont la surface équivalente reste inférieure à celle d'un rond de sac circulaire de 330 mm de diamètre.

## Revendications

1. Dispositif de réduction du diamètre d'un rond de sac (4) équipant une enceinte telle qu'une boîte à gants (2), comprenant une entretoise de réduction de diamètre (6) possédant un premier orifice circulaire (8) ayant un diamètre sensiblement égal au diamètre du rond de sac (4), ce premier orifice (8) étant dirigé vers le rond de sac (4), et un second orifice (10) dirigé vers l'extérieur de l'enceinte en sens opposé au premier orifice, ce second orifice (10) ayant une forme allongée, notamment ovoïde.

2. Dispositif selon la revendication 1, **caractérisé en ce que** le premier orifice (8) est raccordé de manière étanche au rond de sac (4) de l'enceinte par une manche en vinyle (12).

3. Dispositif selon la revendication 1 ou 2, **caractérisé en ce** le second orifice est fermé par un sac en vinyle (17).

4. Dispositif selon l'une des revendications 1 à 3, **caractérisé en ce que** le diamètre du premier orifice (8) est compris entre 500 et 800 mm.

5. Dispositif selon l'une des revendications 1 à 4, **caractérisé en ce que** le second orifice (10) possède un grand axe qui mesure au maximum 400 mm.

## Claims

1. Device for reducing the diameter of a bag port (4), fitted on a containment such as a glove box (2), comprising a diameter reduction spacer (6) with a first circular orifice (8) of the diameter equal to the diameter of the bag port (4), this first orifice (8) facing towards the bag port (4), and the second orifice (10) facing towards the outside of the containment in the direction opposite to the first orifice, this second orifice (10) being elongated in shape and particularly ovoid.

2. Device according to claim 1, **characterised in that** the first orifice (8) is connected to the containment bag port (4) through a vinyl sleeve (12) with a sealed connection.

3. Device according to claim 1 or 2, **characterised in that** the second orifice is closed by a vinyl bag (17).

4. Device according to one of claims 1 to 3, **characterised in that** the diameter of the first orifice (8) is between 500 and 800 mm.

5. Device according to one of claims 1 to 4, **characterised in that** the second orifice (10) has a large axis that measures less than 400 mm.

## Patentansprüche

1. Vorrichtung zur Verringerung des Durchmessers einer Beutelöffnung (4), mit welcher ein Behälter, beispielsweise ein Handschuhkasten (2) versehen ist, mit einem Durchmesserreduzierstück (6), das eine zur Beutelöffnung (4) hin gerichtete kreisförmige erste Öffnung (8), deren Durchmesser im Wesentlichen gleich dem Durchmesser der Beutelöffnung (4) ist, und eine zweite Öffnung (10) aufweist, die der ersten Öffnung gegenüberliegt, an der vom Behälter abgewandten Seite angeordnet ist und eine längliche, insbesondere ovale Form aufweist.

2. Vorrichtung nach Anspruch 1, **dadurch gekennzeichnet, dass** die erste Öffnung (8) über einen Vinylschlauch (12) auf dichte Weise mit der Beutelöffnung (4) des Behälters verbunden ist.

3. Vorrichtung nach Anspruch 1 oder 2, **dadurch gekennzeichnet, dass** die zweite Öffnung mit einem Vinylbeutel (17) geschlossen ist.

4. Vorrichtung nach einem der Ansprüche 1 bis 3, **dadurch gekennzeichnet, dass** der Durchmesser der ersten Öffnung (8) zwischen 500 und 800mm ist.

5. Vorrichtung nach einem der Ansprüche 1 bis 4, **dadurch gekennzeichnet, dass** die zweite Öffnung (10) eine große Achse aufweist, die maximal 400m misst.
